Europäisches Patentamt

**European Patent Office**

**Office européen des brevets**

(19)

(11) Publication number: **0 332 766**
**A1**

# EUROPEAN PATENT APPLICATION

(21) Application number: **88200500.2**

(22) Date of filing: **17.03.88**

(51) Int. Cl.⁴: **F03B 13/06**

(43) Date of publication of application:
**20.09.89 Bulletin 89/38**

(84) Designated Contracting States:
**AT BE CH DE ES FR GB GR IT LI LU NL SE**

(71) Applicant: **Doleh, Zakaria Kalil**
**P.O. Box 1566**
**Dubai(AE)**

(72) Inventor: **Doleh, Zakaria Kalil**
**P.O. Box 1566**
**Dubai(AE)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) **System for regaining energy from a supply system.**

(57) System for regaining energy from a supply system for example a supply system for drinking water etc. In the supply system, for example in the pipelines, (10,11) a unit (3) is installed containing a turbine (4) sealed from the environment in order to prevent pollution. The turbine is drivingly connected to a generator (9) for generating electric energy. As any existing supply system can be used, the opportunity is offered to generate electric energy on places where supply of water is available but where are no existing distributing systems for electricity. The turbine is driven by the water pressure.

FIG.1

# SYSTEM FOR REGAINING ENERGY FROM A SUPPLY SYSTEM

The invention is related to a system for regaining energy from a fluid supply system, such as a supply system for drinking water, distributing systems for the oil and/or gas production etc., provided with a tank for storage of the drinking water and a piping distributing system leading to consumer sites being situated lower than said storage tank.

Supply systems for supplying liquid, such as drinking water etc. are available and existing already in many parts of the world. Most of these supply systems make use of the gravity of the fluid to be supplied. Either by natural circumstances or by technical means the fluid is fed into a storage tank and then it is supplied by gravity and/or pressure means to lower situated locations for distributing.

It is the object of the invention to regain energy contained in the fluid flowing through the supply system, without being compelled to invest heavily in expensive means.

According to the invention this is achieved by a system characterized by a housing for a turbine connected to said piping distributing system having an inlet for liquid and an outlet for liquid, a turbine rotatable around an axis in said housing, an aperture in a wall of said housing, said axis extending through said aperture, a coupling device outside said housing and connecting said axis to a generator to generate electric energy.

In this way part of the energy is regained and converted into electric energy. The remaining energy in the supply system is sufficient to distribute the fluid to the consumers.

According to a preferred embodiment the piping system is provided with a by-pass and the housing of the turbine is connected to said by-pass. The storage tank can be located on top of a building or on top of a mountain or hill.

If the fluid is supplied to the storage tank by a supply system and the fluid is pumped upwards to the storage tank located on a higher level, it is possible to provide a turbine adjacent the outlet of said supply system in order to also regain energy. However, it is also possible to provide such a turbine in that supply system at a lower level.

The invention will be elucidated with the help of the drawings, in which:

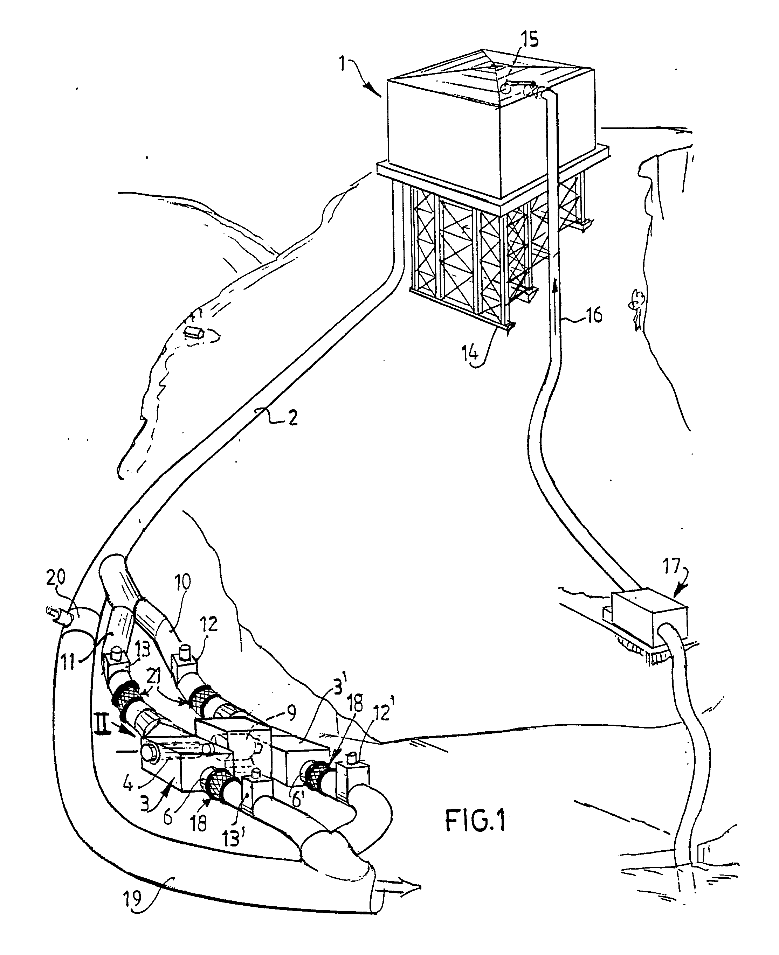

Fig. 1 shows an isometric view of the system according to the invention, and

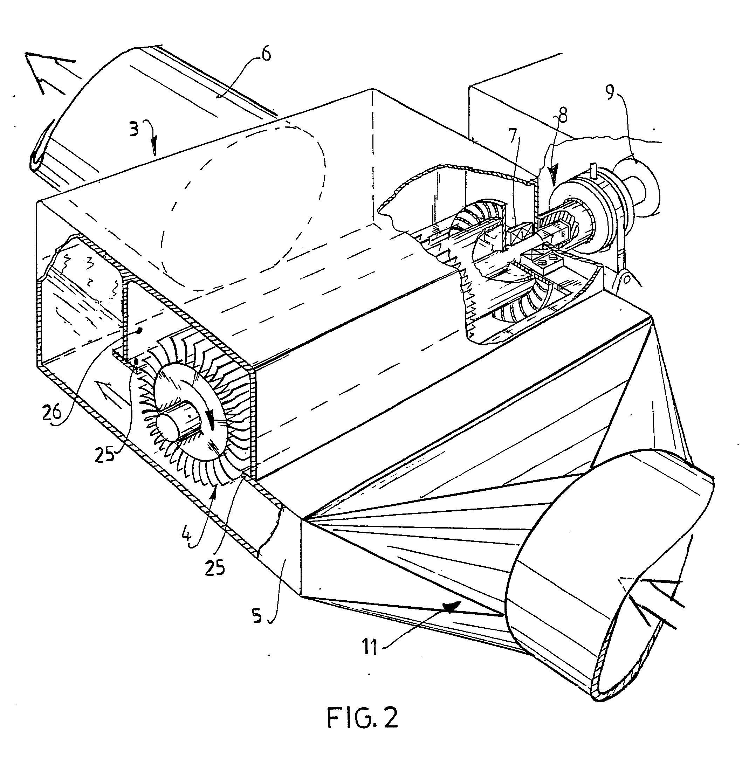

Fig. 2 shows a detail as indicated by II in Fig. 1.

The supply system for supplying fluid, for example drinking water to the consumer, consists of a storage tank 1 located on top of a building 14. It is remarked that the storage tank can also be located on for example a mountain. The system further is provided with a piping system 2 to distribute the drinking water to consumers being located on a lower level than the storage tank. In order to regain energy into the piping system 2 a turbine 3, 3′ is integrated into each of the by-passes 10, 11. The turbines 3, 3′ are housed in a housing and formed by a turbine known per se 4. In the housing, partition walls 25 are provided to prevent the fluid from flowing in the upper chamber 26 of the housing. The housing shows pipes 6 leading to the consumer. The housing 3 is sealed towards the environment in order to prevent pollution of the drinking water. The housing 3 is provided with an inlet 5 for the drinking water and an outlet 6. One of the walls 7 of the housing is provided with an aperture through which the axis of the turbine 4 extends. The axis is connected to a coupling 8 connecting to the generator 9.

Both the main supply pipe 19 and the by-passes 10, 11 are provided with valves 20; 13, 13′; 12 12′ respectively. The by-passes 10, 11 are further provided with couplings 18; 21. This makes it possible to cut either the main supply pipe or the by-pass off the system in order to repair or to exchange the turbine without interrupting the supply to the consumers connected to the system.

If the fluid is fed to the storage tank 1 by means of a pumping system 16 it is possible to also provide at the outlet of the system 16 a turbine 15 regaining energy provided in the flowing fluid.

The system according to the invention can be applied to an existing desalination plant 17 for example that is available for producing drinking water in many parts of the world.

## Claims

1. System for regaining energy from a supply system, such as a supply system for drinking water etc., provided with a tank for storage of the drinking water and a piping distributing system leading to consumer sites being situated lower than said storage tank, characterized by a housing for a turbine connected to said piping distributing system having an inlet for liquid and an outlet for liquid, a turbine rotatable around an axis in said housing, an aperture in a wall of said housing, said axis extending through said aperture, a coupling device outside said housing and connecting said axis to a generator to generate electric energy.

2. System according to claim 1, characterized in that said piping system is provided with a by-pass and in that the housing of the turbine is connected to said by-pass.

3. System according to claim 1, characterized in that the storage tank is located on top of a mountain.

4. System according to claim 1, characterized in that the storage tank is located on top of a building.

5. System according to claim 1, characterized by a supply system for water to said storage tank, a pump connected to said supply system and a turbine adjacent the outlet end of the supplying system.

6. System according to claim 1, characterized by valves in the piping system.

EP 0 332 766 A1

FIG.1

134.61-2

FIG. 2

13461-2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 252 768 (CHERPION)<br>* Page 2, lines 2-16 *<br>--- | 1,5 | F 03 B 13/06 |
| A | US-A-4 132 901 (CRAUSBAY)<br>* Column 2, line 39 - column 3, line 17; column 3, line 53 - column 4, line 12; figures 1,12 *<br>--- | 1-3,5 | |
| A | DE-C- 760 800 (FISCHER)<br>* Page 2, lines 81-113 *<br>--- | 1,2,6 | |
| A | FR-A- 534 907 (CORBET)<br>* Page 2, lines 28-45 *<br>--- | 5 | |
| A | DE-C- 565 375 (HORRMANN)<br>* Page 1, lines 62-74 *<br>----- | 4 | |

TECHNICAL FIELDS
SEARCHED (Int. Cl.4)

F 03 B

The present search report has been drawn up for all claims

| Place of search | Date of completion of the search | Examiner |
|---|---|---|
| THE HAGUE | 18-11-1988 | DE WINTER P.E.F. |